# EUROPEAN PATENT APPLICATION

(11) **EP 2 172 509 A1**
(43) Date of publication of application: **07.04.2010**
(21) Application number: 08790651.7
(22) Date of filing: 26.06.2008
(51) Int. Cl.: C08G 75/04, C09D 7/12, C09D 175/14, C09J 11/06, C09J 175/14, G02B 1/04

(54) **CURABLE COMPOSITION AND CURED PRODUCT THEREOF**

(30) Priority: 13.07.2007 JP 2007184230; 24.04.2008 JP 2008113743
(71) Applicant: Showa Denko K.K., Tokyo 105-8518 (JP)
(72) Inventor: URAKAWA, Yoshifumi, Tokyo 105-8518 (JP); ISHII, Nobuaki, Tokyo 105-8518 (JP); TOMITA, Miyuki, Tokyo 105-8518 (JP); HATTORI, Yotaro, Tokyo 105-8518 (JP); IKEDA, Haruhiko, Tokyo 105-8518 (JP); MUROFUSHI, Katsumi, Tokyo 105-8518 (JP)
(74) Representative: Strehl Schübel-Hopf & Partner
(86) International application number: PCT/JP2008/061636
(87) International publication number: WO 2009/011211

(57) **Abstract**

It is an object of the present invention to provide a curable composition having excellent curability and capable of forming a cured film which is excellent in surface hardness, scratch resistance, flexibility, bending property, transparency and curling property, and a cured product thereof. The curable composition of the present invention is **characterized by** comprising (A) a urethane compound represented by the following general formula (1), (B) a thiol compound and (C) a polymerization initiator. 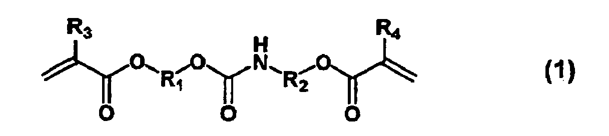 wherein R₁ is a straight-chain or branched divalent aliphatic group, a divalent organic group having an alicyclic group, a divalent organic group having an aromatic ring or [-(CH₂)ₐ-O-(CH₂)_{b}-]_{c} (a and b are each independently an integer of 1 to 10, and c is an integer of 1 to 5), R₂ is a straight-chain or branched divalent aliphatic group, a divalent organic group having an alicyclic group, a divalent organic group having an aromatic ring or [-(CH₂)_{d}-O-(CH₂)ₑ-]_{f} (d and e are each independently an integer of 1 to 10, and f is an integer of 1 to 5), and R₃ and R₄ are each independently a hydrogen atom or a methyl group.

## Description

### TECHNICAL FIELD

The present invention relates to a curable composition which is cured by irradiating it with active energy rays such as ultraviolet rays or electron rays, and a cured product thereof.

### BACKGROUND ART

For coating films, thermosetting type resin compositions or solvent evaporation type resin compositions are used in a certain case. In the case of the thermosetting type, there is a problem of unsuitability for base material having no heat resistance, while in the case of the solvent evaporation type, there is a problem of heavy burden on the environment.

In recent years, further, there have been required curable compositions capable of forming cured films on various base materials which are excellent in hardness, flexibility, scratch resistance, abrasion resistance, low curling property (property that warpage of cured films formed by curing curable compositions is small), adhesion and transparency, as protective coating materials for preventing scratches or stains of various base material surfaces, adhesives for various base materials and sealing materials.

Moreover, curable compositions capable of forming cured films excellent in hardness, flexibility, scratch resistance, abrasion resistance, low curling property, high refractive index, adhesion and transparency have been required in uses for antireflection films of film type liquid crystal elements, touch panels, plastic optical parts, etc.

To meet these requirements, various compositions have been proposed. In order to prevent occurrence of cracking or curling of coating films, improvement, such as decrease of a functional group concentration of a polyfunctional acrylate that is a main component of the coating films or increase of a molecular weight, has been studied. However, it has bad influence such as lowering of surface hardness or scratch resistance of cured products, and it is difficult to obtain favorable hard coat films. In the existing circumstances, further, any curable composition capable of providing cured films having properties of high hardness and excellent flexibility has not been obtained yet.

As techniques intended to overcome these problems, there are techniques described in the following Patent Gazettes.

For example, in Japanese Patent Laid-Open Publication No. H05-179156 (patent document 1), a method for forming a coating film using a resin composition which is cured by heating is described. This method, however, cannot be used for a base material having no heat resistance. In this method, further, curing time is long, and there is a fear of thermal decomposition of a cured resin.

On the other hand, in Japanese Patent Laid-Open Publication No. 2006-168238 (patent document 2), a coating composition which uses an acrylic monomer such as pentaerythritol triacrylate and is cured by irradiating it with ultraviolet rays or electron rays is disclosed. However, curability and curling property of the composition are not described at all, and there is a fear that lowering of productivity and warpage of a coating film due to curing shrinkage take place. In this specification, the term "curling property" is used to mean a property that warpage of a cured product is unlikely to occur when the curable composition is cured.

In Japanese Patent Laid-Open Publication No. 2001-040039 (patent document 3), an energy ray-curable composition containing (meth)acrylic esters having a carbamate group is described. In the process for producing (meth) acrylic esters having a carbamate group disclosed, however, there is a fear of formation of impurities or side reaction by heating.

Also in Japanese Patent Laid-Open Publication No. 2003-221420 (patent document 4), a composition using a (meth) acrylic ester having a carbamate group is described. This composition has been developed as a resist composition, and evaluation as a coating material has not been made.

In Japanese Patent Laid-Open Publication No. H08-259644 (patent document 5), a curable composition using urethane acrylate composed of bisphenol type polyol and an ethylenically unsaturated monomer is disclosed. In this document, improvement in scratch resistance and flexibility has been studied, but even in this technique, there is yet room for improvement regarding the scratch resistance.

In Japanese Patent Laid-Open Publication No. 2005-113033 (patent document 6), a curable composition containing low-molecular weight urethane (meth)acrylate is disclosed, and improvement in scratch resistance and flexibility has been made. Even in the method using this technique, however, there is yet room for improvement regarding the scratch resistance.
Patent document 1: Japanese Patent Laid-Open Publication No. H05-179156
Patent document 2: Japanese Patent Laid-Open Publication No. 2006-168238
Patent document 3: Japanese Patent Laid-Open Publication No. 2001-040039
Patent document 4: Japanese Patent Laid-Open Publication No. 2003-221420
Patent document 5: Japanese Patent Laid-Open Publication No. H08-259644
Patent document 6: Japanese Patent Laid-Open Publication No. 2005-113033

### DISCLOSURE OF THE INVENTION

### PROBLEM TO BE SOLVED BY THE INVENTION

It is an object of the present invention to provide a curable composition which is excellent in curability and surface hardness of a cured product and is capable of forming a cured film having good transparency and curling property, and a cured product of the composition.

In the recent manufacture line of coating films, the line speed tends to be increased in order to enhance productivity. In order to cope with this tendency, it is necessary that a curable composition is cured by irradiating it with energy rays in a low light-exposed dose. If it is cured by irradiation with energy rays in a low light-exposed dose, not only energy is saved but also production cost of cured products can be decreased.

Accordingly, it is also an object of the present invention to provide a photo-curable composition which is cured by irradiation with energy rays in a low light-exposed dose, and a cured product thereof.

It is also an obj ect of the present invention to provide a curable composition capable of forming a cured film which has both tenacious strength such as bending property or elongation property and flexibility, with maintaining the above-mentioned respective properties of surface hardness, scratch resistance, curling property and transparency, and a cured product thereof.

### MEANS TO SOLVE THE PROBLEM

In order to solve the above problems, the present inventors have earnestly studied, and as a result, they have found that the above problems can be solved by a curable composition comprising a specific urethane compound, a thiol compound and a polymerization initiator.

That is to say, the present invention is summarized as follows.

[1] A curable composition comprising (A) a urethane compound represented by the following general formula (1), (B) a thiol compound and (C) a polymerization initiator,

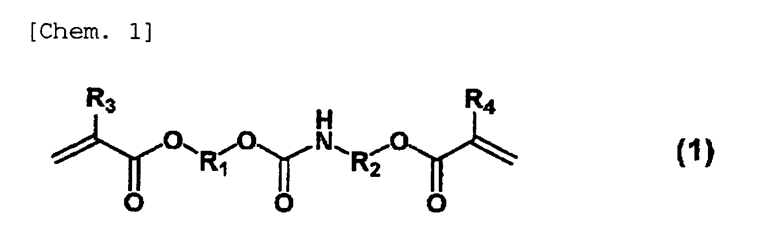

wherein R₁ is a straight-chain or branched divalent aliphatic group of 1 to 12 carbon atoms, a divalent organic group of 3 to 12 carbon atoms having an alicyclic group, a divalent organic group of 6 to 30 carbon atoms having an aromatic ring or [-(CH₂)ₐ-O-(CH₂)_{b}-]_{c} (a and b are each independently an integer of 1 to 10, and c is an integer of 1 to 5),
R₂ is a straight-chain or branched divalent aliphatic group of 1 to 10 carbon atoms, a divalent organic group of 3 to 10 carbon atoms having an alicyclic group, a divalent organic group of 6 to 30 carbon atoms having an aromatic ring or [-(CH₂)_{d}-O-(CH₂)ₑ-]_{f} (d and e are each independently an integer of 1 to 10, and f is an integer of 1 to 5), and
R₃ and R₄ are each independently a hydrogen atom or a methyl group.

[2] The curable composition as stated in [1], wherein in the formula (1), R₁ is a divalent aliphatic group of 1 to 6 carbon atoms or [-(CH₂)ₐ-O-(CH₂)_{b}-]_{c} (a and b are each independently an integer of 1 to 5, and c is an integer of 1 to 3), R₂ is a divalent aliphatic group of 1 to 6 carbon atoms, a divalent organic group of 6 to 30 carbon atoms having a benzene ring or [-(CH₂)_{d}-O-(CH₂)ₑ-]_{f} (d and e are each independently an integer of 1 to 5, and f is an integer of 1 to 3), and R₃ and R₄ are each independently a hydrogen atom or a methyl group.

[3] The curable composition as stated in [1] or [2], wherein based on 10 parts by mass of the urethane compound (A), the thiol compound (B) is contained in an amount of 0.1 to 10 parts by mass, and the polymerization initiator (C) is contained in an amount of 0.1 to 5 parts by mass.

[4] The curable composition as stated in any one of [1] to [3], further comprising (D) a urethane oligomer.

[5] The curable composition as stated in [4], wherein the urethane oligomer (D) is contained in an amount of 1 to 100 parts by mass based on 10 parts by mass of the urethane compound (A).

[6] The curable composition as stated in any one of [1] to [5], further comprising (E) a reactive monomer.

[7] The curable composition as stated in [6], wherein the reactive monomer (E) is contained in an amount of 1 to 100 parts by mass based on 10 parts by mass of the urethane compound (A).

[8] The curable composition as stated in any one of [1] to [7], wherein the thiol compound (B) has two or more structures represented by the following general formula (2):

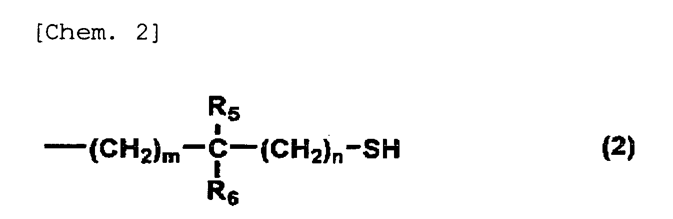

wherein R₅ and R₆ are each independently a hydrogen atom, an alkyl group of 1 to 10 carbon atoms or an aryl group, m is an integer of 0 to 2, and n is 0 or 1.

[9] The curable composition as stated in [8], wherein R₅ and R₆ in the formula (2) are not hydrogen atoms at the same time.

[10] A paint comprising the curable composition as stated in any one of [1] to [9].

[11] An adhesive comprising the curable composition as stated in any one of [1] to [9].

[12] A cured product obtained by curing the curable composition as stated in any one of [1] to [9].

[13] A coating material obtained by curing the curable composition as stated in any one of [1] to [9].

[14] An optical film obtained by curing the curable composition as stated in any one of [1] to [9].

### EFFECT OF THE INVENTION

According to the present invention, there can be provided a curable composition which can form a cured product having excellent surface hardness and scratch resistance, having good transparency and curling property and having tenacious strength such as bending property or elongation property and flexibility and which is cured in a low light-exposed dose, and a cured product thereof.

### BEST MODE FOR CARRYING OUT THE INVENTION

The embodiment of the present invention is described in detail hereinafter. The curable composition of the present invention (also referred to as a "curable composition" simply hereinafter) comprises, as described above, (A) a urethane compound represented by the general formula (1), (B) a thiol compound and (C) a polymerization initiator.

### <(A) Urethane compound>

The urethane compound (A) for use in the present invention (also referred to as a "urethane compound (A)" simply hereinafter) is represented by the following general formula (1) and contains 2 or more polymerizable unsaturated bonds in a molecule.

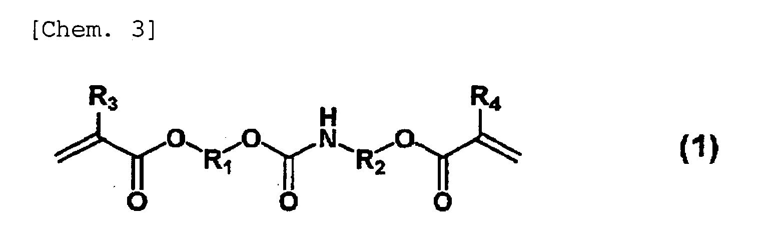

In the general formula (1), R₁ is a straight-chain or branched divalent aliphatic group of 1 to 12 carbon atoms, a divalent organic group of 3 to 12 carbon atoms having an alicyclic group, a divalent organic group of 6 to 30 carbon atoms having an aromatic ring or [-(CH₂)ₐ-O-(CH₂)_{b}-]_{c} (a and b are each independently an integer of 1 to 10, and c is an integer of 1 to 5). From the viewpoints of curability of the later-described curable composition of the present invention and a balance between hardness and curling property of a cured product obtained by curing the curable composition (also referred to as a "cured product" simply hereinafter), R₁ is preferably a divalent aliphatic group of 1 to 6 carbon atoms or [-(CH₂)ₐ-O-(CH₂)_{b}-]_{c} (a and b are each independently an integer of 1 to 5, and c is an integer of 1 to 3), more preferably a divalent aliphatic group of 2 to 4 carbon atoms or [-(CH₂)ₐ-O-(CH₂)_{b}-]_{c} (a and b are each independently an integer of 2 to 4, and c is 1 or 2), still more preferably a divalent aliphatic group of 2 or 3 carbon atoms or -(CH₂)₂-O-(CH₂)₂-.

In the general formula (1), R₂ is a straight-chain or branched divalent aliphatic group of 1 to 10 carbon atoms, a divalent organic group of 3 to 10 carbon atoms having an alicyclic group, a divalent organic group of 6 to 30 carbon atoms having an aromatic ring or [-(CH₂)_{d}-O-(CH₂)ₑ-]_{f} (d and e are each independently an integer of 1 to 10, and f is an integer of 1 to 5). From the viewpoints of curability of the later-described curable composition of the present invention and a balance between hardness and curling property of a cured product obtained by curing the curable composition, R₂ is preferably a divalent aliphatic group of 1 to 6 carbon atoms, a divalent organic group of 6 to 30 carbon atoms having a benzene ring or [-(CH₂)_{d}-O-(CH₂)ₑ-]_{f} (d and e are each independently an integer of 1 to 5, and f is an integer of 1 to 3), more preferably a divalent aliphatic group of 2 to 4 carbon atoms, a divalent organic group of 6 to 30 carbon atoms having a benzene ring or [-(CH₂)_{d}-O-(CH₂)ₑ-_{f} (d and e are each independently an integer of 2 to 4, and f is 1 or 2), still more preferably a divalent aliphatic group of 2 or 3 carbon atoms or -(CH₂)₂-O-(CH₂)₂-.

In the formula (1), R₃ and R₄ are each independently a hydrogen atom or a methyl group. From the viewpoint of curability which is a property of being cured in a low light-exposed dose, they are preferably hydrogen atoms.

By using the urethane compound (A) in the curable composition, a cured product having an excellent balance among surface hardness, transparency and curling property is obtained. That is to say, high qualities of various articles composed of the cured products of the present invention can be attained.

The content of the urethane compound (A) is in the range of preferably 10 to 99 parts by mass, more preferably 20 to 99 parts by mass, still more preferably 30 to 99 parts by mass, in 100 parts by mass of the curable composition of the present invention. When the content of the urethane compound (A) is in the above range, a resin excellent in curability, pencil hardness, scratch resistance, curling property and a balance between strength and flexibility can be obtained.

The urethane compound represented by the above general formula (1) for use in the present invention can be synthesized by bringing a polymerizable unsaturated group-containing alcohol compound represented by the following general formula (3) (also referred to as a "compound (1)" hereinafter) into contact with a polymerizable unsaturated group-containing isocyanate compound represented by the following general formula (4) (also referred to as a "compound (2)" hereinafter).

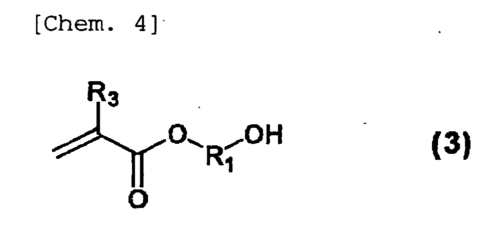

In the formula (3), R₁ and R₃ are the same as those previously described.

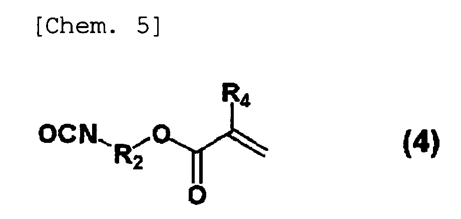

In the formula (4), R₂ and R₄ are the same as those previously described.

Examples of the compounds (1) include 2-hydroxyethyl (meth)acrylate, 2-hydroxypropyl (meth)acrylate, 3-hydroxypropyl (meth) acrylate and 4-hydroxybutyl (meth)acrylate. These can be used singly or in combination of two or more kinds. 2-Hydroxyethyl (meth)acrylate is preferred.

In the case where R₃ is a hydrogen atom, that is, in the case where the compound (1) has an acrylate structure, curability of a curable composition containing the resulting urethane compound generally tends to be better than in the case where R₃ is a methyl group, that is, in the case where the compound (1) has a methacrylate structure. In the present specification, the expression "(meth)acrylate" means methacrylate and/or acrylate.

R₂ of OCN-R₂- of the isocyanate compound which is represented by the general formula (4) and has one or more unsaturated groups in a molecule is the same as R₂ in the compound represented by the above general formula (1) . Specific examples of OCN-R₂- include the following (a) to (e).

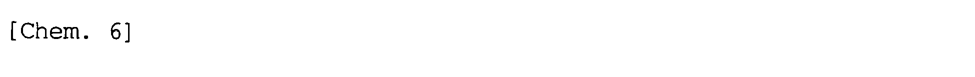

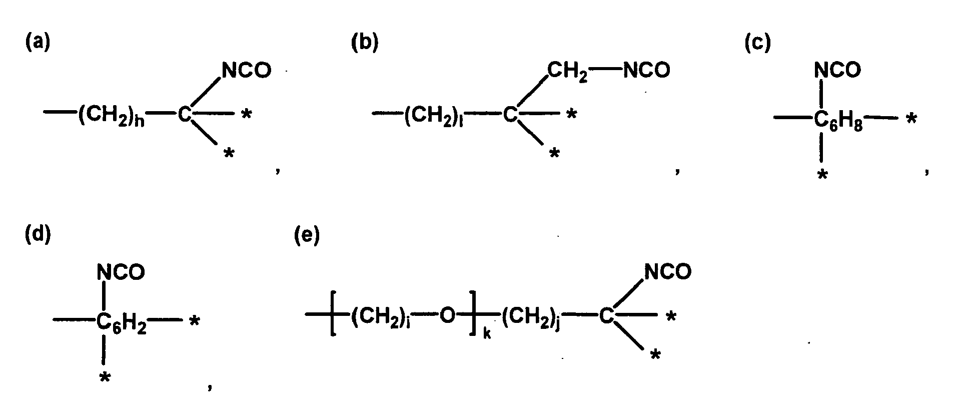

In the above formulas, * is a structure containing an isocyanate group, hydrogen, a (meth) acrylic group, a hydrocarbon group or an aromatic ring. Each * may be the same or different. (a) is a structure containing a divalent saturated aliphatic group having a straight-chain or branched structure, an alicyclic group or an aromatic ring, and h is an integer satisfying the condition that the number of carbon atoms of the moiety excluding the isocyanate group is not less than 1 but not more than 10. (b) is a structure containing a divalent saturated aliphatic group having a straight-chain or branched structure, an alicyclic group or an aromatic ring, and 1 is an integer satisfying the condition that the number of carbon atoms of the moiety excluding the isocyanate group is not less than 1 but not more than 10. (c) is a structure having a cyclohexane ring as a main skeleton, and the number of carbon atoms of the moiety excluding the isocyanate group is not less than 6 but not more than 10. (d) is a structure having a benzene ring as a main skeleton, and the number of carbon atoms of the moiety excluding the isocyanate group is not less than 6 but not more than 30. (e) is a structure having an ether skeleton, and i, j and k are each an integer satisfying the condition that the number of carbon atoms of the moiety excluding the isocyanate group is not less than 1 but not more than 100.

In the above general formula (4), R₄ is a hydrogen atom or a methyl group, preferably a hydrogen atom.

Preferred specific examples of the compounds (2) are given below. Examples having the structure of (a) include 2- (meth) acryloyloxyethyl isocyanate, 3-(meth)acryloyloxypropyl isocyanate, 4-(meth)acryloyloxybutyl isocyanate, 5-(meth)acryloylpentyl isocyanate, 6-(meth)acryloyloxyhexyl isocyanate, 2-(meth)acryloyloxypropyl isocyanate and 1,1-bis(acryloyloxymethyl)ethyl isocyanate. Examples having the structure of(b)include3-isocyanato-2-methylpropyl(meth)acrylate. Examples having the structure of (c) include 3-isocyanatocyclohexyl (meth)acrylate and 4-isocyanatocyclohexyl (meth)acrylate. Examples having the structure of (d) include 3-isocyanatophenyl (meth)acrylate, 4-isocyanatophenyl (meth)acrylate and 3,5-diisocyanato-2-methylphenyl (meth)acrylate. Examples having the structure of (e) include 2-(isocyanatoethyloxy)ethyl (meth) acrylate.

In the case where R₄ is a hydrogen atom, that is, in the case where the compound (2) has an acrylate structure, curability of a curable composition containing the resulting urethane compound tends to be better than in the case where R₄ is a methyl group, that is, in the case where the compound (2) has a methacrylate structure.

In the reaction of the compound (1) with the compound (2), the molar ratio between them is in the range of 1:1 to 1:1.5 (compound (1):compound (2)).

When the compound (1) and the compound (2) are allowed to react with each other, it is preferable to use an urethanization catalyst. By the use of the urethanization catalyst, the reaction can be remarkably accelerated. Specific examples of the urethanization catalysts include dibutyltin dilaurate, copper naphthenate, cobalt naphthenate, zinc naphthenate, triethylamine, 1,4-diazabicyclo[2.2.2]octane and 2,6,7-trimethyl-1,4-diazabicyclo[2.2.2]octane.

These urethanization catalysts may be used singly or may be used in combination of two or more kinds. The amount of the urethanization catalyst added is in the range of preferably 0.01 to 5 parts by mass, more preferably 0.1 to 1 part by mass, based on 100 parts by mass of the compound (2) . If the added amount is less than 0.01 part by mass, reactivity is sometimes lowered. On the other hand, if the added amount exceeds 5 parts by mass, there is a possibility of occurrence of side reaction during the reaction.

The reaction temperature in the reaction of the compound (1) with the compound (2) is in the range of preferably -10 to 100°C, more preferably 0 to 60°C, still more preferably 10 to 30°C.

The above reaction can be carried out in BHT (2,6-di-tert-butyl-4-methylphenol)-containing hexane. Since the BHT-containing hexane can be used as it is as a wash solvent after the reaction is completed, burden on the environment can be reduced when the reaction is carried out. In this case, the content of BHT in the BHT-containing hexane is in the range of 1 to 1000 ppm, preferably 50 to 500 ppm, more preferably 100 to 400 ppm.

By carrying out the reaction under the conditions of the above-mentioned quantity ratio and temperature, side reaction is inhibited, and the urethane compound (A) of good purity can be obtained in favorable yields. Further, since the reaction can be carried out at room temperature or its vicinity, the possibility of polymerization of the urethane compounds (A) with each other can be reduced*.

The curable composition of the present invention comprises (A) the urethane compound obtained by, for example, the above reaction, (B) a thiol compound and (C) a polymerization initiator. By incorporating the thiol compound (B) into the curable composition, curability and curling property of the curable composition can be improved. The reason why the curability can be improved is that by the addition of the thiol compound, inhibition of radical polymerization by oxygen can be reduced. And the reason why the curling property can be improved is that by the addition of the thiol compound, the ene-thiol addition reaction proceeds to thereby depress degree of polymerization and also to depress crosslink density. That the curability is excellent is equivalent to that the amount of energy rays required to cure the curable composition per unit is small. Accordingly, this leads to improvement in productivity of cured products based on the fact that the time of irradiation with energy rays can be shortened and leads to reduction of cost due to saving of energy, so that the industrial significance of the present invention is extremely great.

### <(B) Thiol compound>

The thiol compound (B) is not specifically restricted as long as it is a compound having a mercapto group in a molecule. But, it is preferably a compound having two or more mercapto groups in one molecule.

Specific examples of the thiol compounds (B) for use in the present invention include ethylene glycol bis (3-mercaptobutyrate), propylene glycol bis(3-mercaptobutyrate), diethylene glycol bis(3-mercaptobutyrate), butanediol bis(3-mercaptobutyrate), octanediol bis(3-mercaptobutyrate), trimethylolpropane tris(3-mercaptobutyrate), pentaerythritol tetrakis(3-mercaptobutyrate), dipentaerythritol hexakis(3-mercaptobutyrate), ethylene glycol bis(2-mercaptopropionate), propylene glycol bis(2-mercaptopropionate), diethylene glycol ' bis(2-mercaptopropionate), butanediol bis(2-mercaptopropionate), octanediol bis(2-mercaptopropionate), trimethylolpropane tris(2-mercaptopropionate), pentaerythritol tetrakis(2-mercaptopropionate), dipentaerythritol hexakis(2-mercaptopropionate), ethylene glycol bis(3-mercaptoisobutyrate), propylene glycol bis(3-mercaptoisobutyrate), diethylene glycol bis(3-mercaptoisobutyrate), butanediol bis(3-mercaptoisobutyrate), octanediol bis(3-mercaptoisobutyrate), trimethylolpropane tris(3-mercaptoisobutyrate), pentaerythritol tetrakis(3-mercaptoisobutyrate), dipentaerythritol hexakis(3-mercaptoisobutyrate), ethylene glycol bis(2-mercaptoisobutyrate), propylene glycol bis(2-mercaptoisobutyrate), diethylene glycol bis(2-mercaptoisobutyrate), butanediol bis(2-mercaptoisobutyrate), octanediol bis(2-mercaptoisobutyrate), trimethylolpropane tris(2-mercaptoisobutyrate), pentaerythritol tetrakis(2-mercaptoisobutyrate), dipentaerythritol hexakis(2-mercaptoisobutyrate), ethylene glycol bis(4-mercaptovalerate), propylene glycol bis(4-mercaptoisovalerate), diethylene glycol bis(4-mercaptovalerate), butanediol bis(4-mercaptovalerate), octanediol bis(4-mercaptovalerate), trimethylolpropane tris(4-mercaptovalerate), pentaerythritol tetrakis(4-mercaptovalerate), dipentaerythritol hexakis(4-mercaptovalerate), ethylene glycol bis(3-mercaptovalerate), propylene glycol bis(3-mercaptovalerate), diethylene glycol bis(3-mercaptovalerate), butanediol bis(3-mercaptovalerate), octanediol bis(3-mercaptovalerate), trimethylolpropane tris(3-mercaptovalerate), pentaerythritol tetrakis(3-mercaptovalerate), dipentaerythritol hexakis(3-mercaptovalerate), hydrogenated bisphenol A bis(3-mercaptobutyrate), bisphenol A dihydroxyethyl ether-3-mercaptobutyrate, 4,4'-(9-fluorenylidene)bis(2-phenoxyethyl(3-mercaptobutyrate)), ethylene glycol bis(3-mercapto-3-phenylpropionate), propylene glycol bis(3-mercapto-3-phenylpropionate), diethylene glycol bis(3-mercapto-3-phenylpropionate), butanediol bis(3-mercapto-3-phenylpropionate), octanediol bis(3-mercapto-3-phenylpropionate), trimethylolpropane tris(3-mercapto-3-phenylpropionate), tris-2-(3-mercapto-3-phenylpropionato)ethyl isocyanurate, pentaerythritol tetrakis(3-mercapto-3-phenylpropionate) and dipentaerythritol hexakis(3-mercapto-3-phenylpropionate).

As a more preferred thiol compound for use in the present invention, a compound having two or more structures represented by the following general formula (2) can be mentioned.

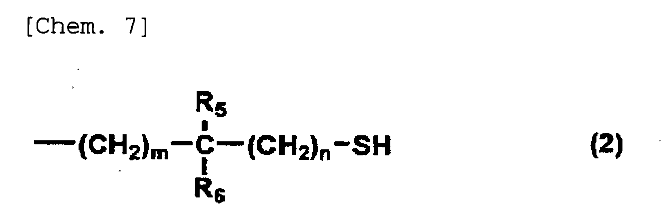

In the formula (2), R₅ and R₆ are each independently a hydrogen atom, an alkyl group of 1 to 10 carbon atoms or an aryl group, m is an integer of 0 to 2, and n is 0 or 1. From the viewpoints of odor and stability, this compound is preferably a compound wherein R₅ and R₆ are not hydrogen atoms at the same time.

Specific examples thereof include polyfunctional thiol compounds represented by the following formulas (5) to (16).

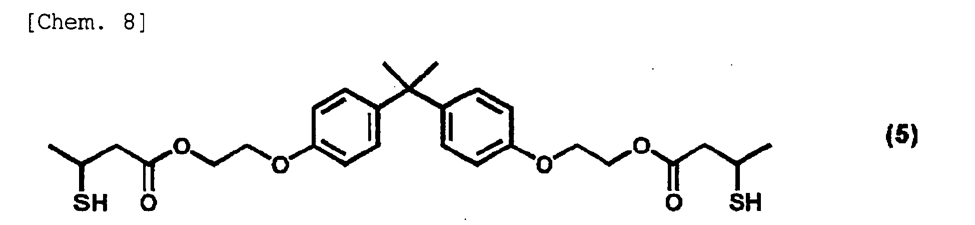

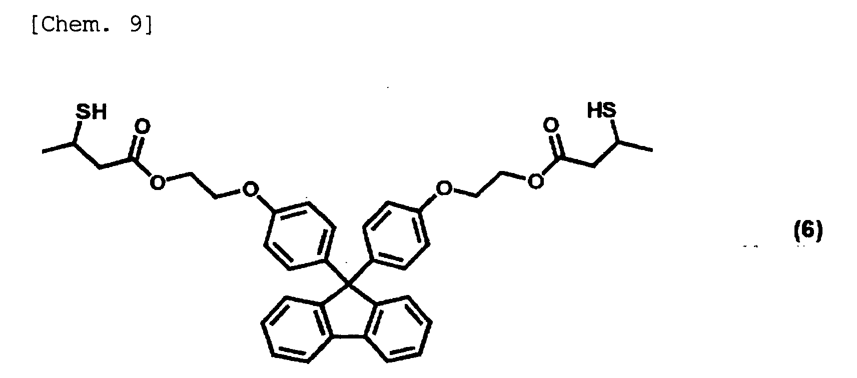

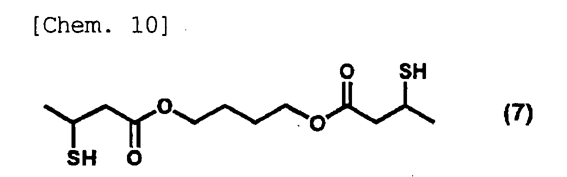

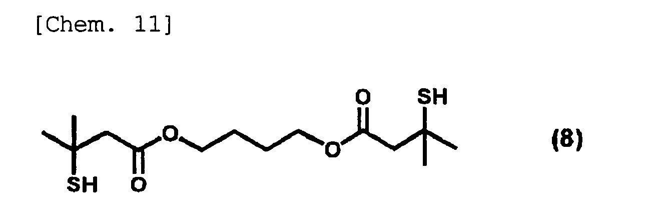

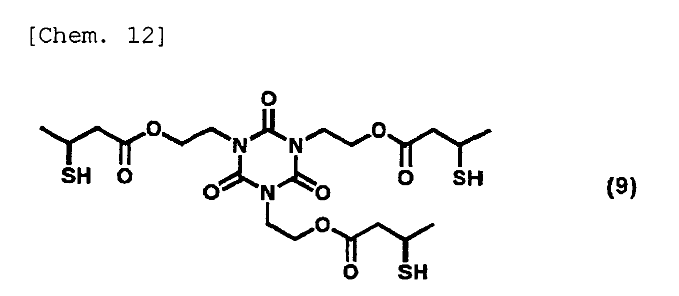

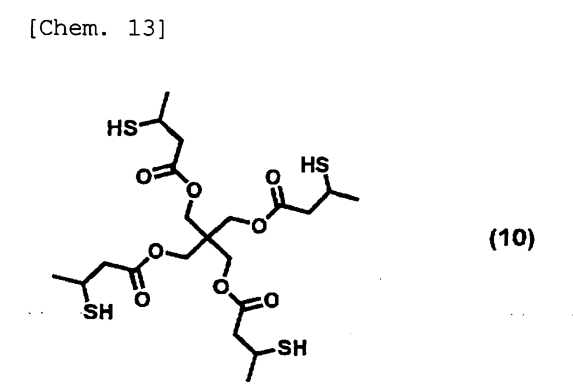

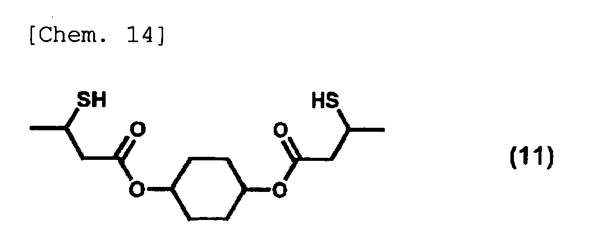

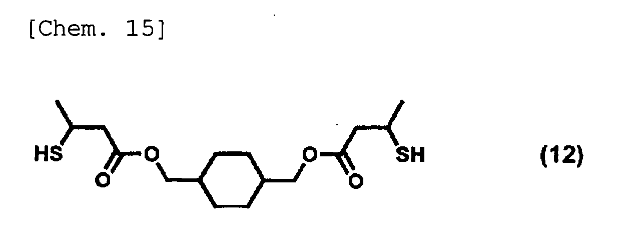

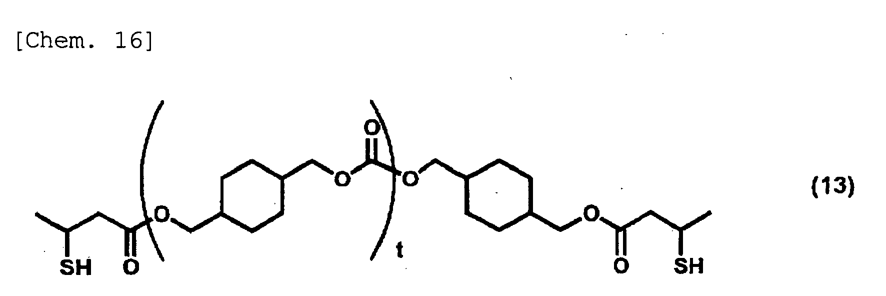

In the formula (13), t is an integer of 1 to 10.

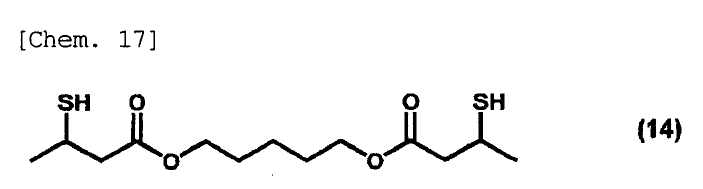

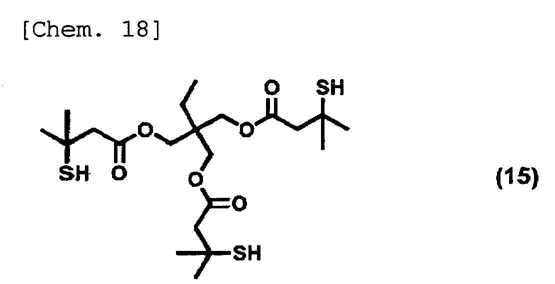

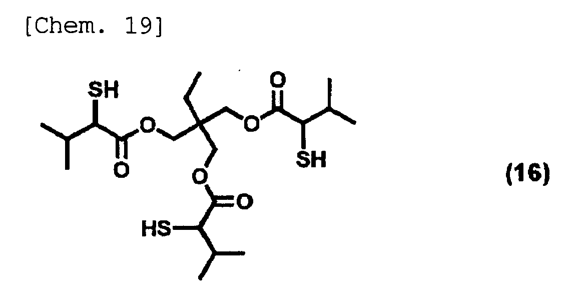

The thiol compounds (B) for use in the invention can be used singly or in combination of two or more kinds.

Although the molecular weight of the thiol compound (B) for use in the present invention is not specifically restricted, it is in the range of preferably 200 to 2000. If it is less than 200, the curable composition sometimes develops odor. And if it is more than 2000, reactivity and curability of the curable composition are sometimes lowered.

Although the amount of the thiol compound (B) used is not specifically restricted, it is in the range of usually 0.1 to 10 parts by mass, preferably 0.1 to 5 parts by mass, more preferably 0.4 to 1 part by mass, based on 10 parts by mass of the urethane compound (A). By setting the amount of the thiol compound (B) used in the above range, curability of the curable composition can be enhanced. This is because by the addition of the thiol compound (B), inhibition of radical polymerization by oxygen can be reduced. Moreover, properties of the resulting cured product, e.g., mechanical properties such as reactivity, hardness, elasticity and adhesion, and optical properties such as transparency can be controlled.

### <(C) Polymerization initiator>

The curable composition of the present invention contains (C) a polymerization initiator.

In the present invention, a photopolymerization initiator or a thermal polymerization initiator is employable as the polymerization initiator (C). From the viewpoint of being employable even for a base material with low heat resistance, the photopolymerization initiator is preferable.

When the photopolymerization initiator is used, polymerization reaction of a component contained in the curable composition is brought about by irradiation with active energy rays such as ultraviolet rays or visible rays, whereby a cured product can be obtained.

Specific examples of such photopolymerization initiators include 1-hydroxycyclohexyl phenyl ketone, 2,2'-dimethoxy-2-phenylacetophenone, xanthone, fluorene, fluorenone,benzaldehyde, anthraquinone, triphenylamine, carbazole, 3-methylacetophenone, 4-chlorobenzophenone, 4,4'-dimethoxybenzophenone, 4,4'-diaminobenzophenone, Michler's ketone, benzoyl propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, phenylglyoxylic acid methyl ester, thioxanthone, diethylthioxanthone, 2-isopropylthioxanthone, 2-chlorothioxanthone, 2-methyl-1-[4-(methylthio)phenyl]-2-morpholinopropan-1-one, 2,4,6-trimethylbenzoyldiphenylphosphine oxide, 2-benzyl-2-dimethylamino-1-(4-morpholinophenyl)butan-1-one and 1-[4-(2-hydroxyethoxy)-phenyl]-2-hydroxy-2-methylpropan-1-one. These photopolymerization initiators may be used singly or may be used in combination of two or more kinds.

When the thermal polymerization initiator is used, polymerization reaction of the urethane compound (A), the later-described urethane oligomer (D) and reactive monomer (E) is brought about by heating, whereby a cured product can be obtained. The thermal polymerization initiator is, for example, an azo compound or an organic peroxide. Examples of the azo compounds include 2,2'-azobis(isobutyronitrile), 2,2'-azobis(2,4-dimethylvaleronitrile), 2,2'-azobis(isobutyric acid)dimethyl, 4,4'-azobis(4-cyanovaleric acid), 2,2'-azobis(2-amidinopropane) dihydrochloride and 2,2'-azobis{2-methyl-N-[2-(1-hydroxybutyl)]-propionamide}. Examples of the organic peroxides include benzoyl peroxide and lauroyl peroxide. These thermal polymerization initiators maybe used singly or may be used in combination of two or more kinds.

Although the amount of the polymerization initiator (B) used is not specifically restricted, it is in the range of usually 0.1 to 10 parts by mass, preferably 0.1 to 5 parts by mass, more preferably 0.2 to 2 parts by mass, still more preferably 0.2 to 1 part by mass, based on 10 parts by mass of the urethane compound (A). By setting the amount of the polymerization initiator (B) in the above range, the rate of polymerization of the reactive monomer (E) is increased, and besides, the curable composition is not subject to polymerization inhibition by oxygen or the like. Moreover, high strength, adhesive strength and heat resistance of the resulting cured film can be attained, and coloring very hardly takes place.

The curable composition of the present invention comprises the urethane compound (A) represented by the general formula (1), the thiol compound (B) and the polymerization initiator (C), as described above. The curable composition comprising these components is excellent in curability and curling property, and a cured product obtained by curing thereof is excellent in surface hardness and transparency. Therefore, if the curable composition of the present invention is used, articles of high quality can be manufactured at low costs.

The curable composition of the present invention may further contain (D) a urethane oligomer and/or (E) a reactive monomer in addition to the above three components. By incorporating these components, viscosity of the curable composition can be controlled, and besides, properties of the resulting cured product, e.g., reactivity, mechanical properties such as hardness, elasticity and adhesion, and optical properties such as transparency, can be controlled.

### <(D) Urethane oligomer>

The urethane oligomer (D) is an oligomer having a polymerizable double bond and a urethane bond, and is a polymer having preferably 2 or more constituent units, more preferably about 2 to 20 constituent units. Examples thereof include Beam Set 102, 502H, 505A-6, 510, 550B, 551B, 575, 575CB, EM-90 and EM92 (trade names, available from Arakawa Chemical Industries, Ltd.); Photomer 6008 and 6210 (trade names, available from San Nopco Limited); NK Oligo U-2PPA, U-4HA, U-6HA, U-15HA, UA-32P, U-324A, U-4H, U-6H, UA-160TM, UA-122P, UA-2235PE, UA-340P, UA-5201 and UA-512 (trade names, Shin-Nakamura Chemical Co., Ltd.); Alonix M-1100, M-1200, M-1210, M-1310, M-1600, M-1960, M-5700 and Alon Oxetan OXT-101 (trade names, available from Toagosei Co. , Ltd.) ; AH-600, AT606, UA-306H and UF-8001 (trade names, available fromKyoeisha Chemical Co., Ltd.); KayaradUX-2201, UX-2301, UX-3204, UX-3301, UX-4101, UX-6101 and UX-7101 (trade names, available from Nippon Kayaku Co., Ltd.); Shiko UV-1700B, UV-3000B, UV-6100B, UV-6300B,UV-7000, UV-7600B, UV-7605B, UV-2010B, UV-6630B, UV-7510B, UV-7461TE, UV-3310B and UV-6640B (trade names, available from Nippon Synthetic Chemical Industry Co., Ltd.); Art Resin UN-1255, UN-5200, HDP-4T, HMP-2, UN-901T, UN-3320HA, UN-3320HB, UN-3320HC, UN-3320HS, H-61, HDP-M20, UN-5500 and UN5507 (trade names, available from Negami Chemical Industrial Co., Ltd.); and Ebecryl 6700, 204, 205, 220, 254, 1259, 1290K, 1748, 2002, 2220, 4833, 4842, 4866, 5129, 6602 and 8301 (trade names, available from Daicel-UCB Co., Ltd.).

For the purpose of giving hardness to a cured film, urethane oligomers having 3 or more (meth)acrylate groups are preferable as the urethane oligomers (D), and urethane oligomers having 6 or more (meth)acrylate groups are more preferable. Examples thereof the aforesaid U-6HA, U-15HA, UA-32P, UV-1700B, UV-7600B and UV-7605B (trade names).

For the purpose of giving flexibility to a cured film, the aforesaid UA-160TM, UA-122P, UA-5201, UV-6630B, UV-7000B, UV-6640B, UN-905, UN-901 and UN-7700 (trade names), etc. can be preferably mentioned as specific examples of the urethane oligomers (D).

Although the weight-average molecular weight of the urethane oligomer (D) is not specifically restricted in any case of the purpose of giving hardness to the cured film or the purpose of giving flexibility to the cured film, it is in the range of preferably 500 to 15000, more preferably 1000 to 6000, still more preferably 1000 to 3000. In the present specification, the weight-average molecular weight means a weight-average molecular weight in terms of polystyrene as measured by GPC (gel permeation chromatography).

The above urethane oligomers (D) can be used singly or in combination of two or more kinds.

Although the amount of the urethane oligomer (D) used is not specifically restricted, it is in the range of usually 0.1 to 100 parts by mass, preferably 0.5 to 80 parts by mass, more preferably 1 to 50 parts by mass, still more preferably 1 to 30 parts by mass, based on 10 parts by mass of the urethane compound (A). By the use of the urethane oligomer (D), surface hardness of a cured product obtained by curing the curable composition can be controlled, and reduction of curling property in the curing process can be made.

### (E) Reactive monomer

The reactive monomer (E) is a monomer having a polymerizable unsaturated bond, and may be a monofunctional monomer or a polyfunctional monomer. Examples thereof include polymerizable unsaturated aromatic compounds, carboxyl group-containing compounds, monofunctional (meth)acrylates, di(meth)acrylates, polyfunctional (meth)acrylates, epoxy poly(meth)acrylates, urethane poly(meth)acrylates and polyester poly(meth)acrylates.

Examples of the polymerizable unsaturated aromatic compounds include diisopropenylbenzene, styrene, α-methylstyrene, o-methylstyrene, m-methylstyrene, p-methylstyrene, p-tert-butylstyrene, o-chlorostyrene, m-chlorostyrene, p-chlorostyrene, 1,1-diphenylethylene, p-methoxystyrene, N,N-dimethyl-p-aminostyrene, N,N-diethyl-p-aminostyrene, ethylenically unsaturated pyridine and ethylenically unsaturated imidazole.

Examples of the carboxyl group-containing compounds include (meth)acrylic acid, crotonic acid, maleic acid, fumaric acid and itaconic acid.

Examples of the monofunctional (meth)acrylates include alkyl (meth) acrylates such as methyl (meth)acrylate, ethyl (meth)acrylate, propyl (meth)acrylate, isopropyl (meth) acrylate, butyl (meth)acrylate, isobutyl (meth) acrylate, tert-butyl (meth) acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth) acrylate, decyl (meth) acrylate, isodecyl (meth) acrylate, undecyl (meth)acrylate, dodecyl (meth)acrylate, lauryl (meth)acrylate, stearyl (meth)acrylate and isostearyl (meth)acrylate; fluoroalkyl (meth) acrylates such as trifluoroethyl (meth) acrylate, tetrafluoropropyl (meth)acrylate, hexafluoroisopropyl (meth)acrylate, octafluoropentyl (meth)acrylate and heptadecafluorodecyl (meth)acrylate; hydroxyalkyl (meth)acrylates such as hydroxyethyl (meth)acrylate, hydroxypropyl (meth)acrylate and hydroxybutyl (meth)acrylate; phenoxyalkyl (meth) acrylates such as phenoxyethyl (meth) acrylate and 2-hydroxy-3-phenoxypropyl (meth)acrylate; alkoxyalkyl (meth)acrylates such as methoxyethyl (meth)acrylate, ethoxyethyl (meth) acrylate, propoxyethyl (meth)acrylate, butoxyethyl (meth) acrylate and methoxybutyl(meth)acrylate; polyethylene glycol (meth)acrylates such as polyethylene glycol mono(meth)acrylate, ethoxydiethylene glycol (meth) acrylate, methoxypolyethylene glycol (meth) acrylate, phenoxypolyethylene glycol (meth)acrylate and nonylphenoxypolyethylene glycol (meth)acrylate; polypropylene glycol (meth)acrylates such as polypropylene glycol mono(meth)acrylate, methoxypolypropylene glycol (meth)acrylate, ethoxypolypropylene glycol (meth)acrylate and nonylphenoxypolypropylene glycol (meth)acrylate; cycloalkyl (meth) acrylates such as cyclohexyl (meth) acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate and tricyclodecanyl (meth)acrylate; benzyl (meth)acrylate, and tetrahydrofurfuryl (meth)acrylate.

Examples of the di(meth)acrylates include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, neopentyl glycol di(meth)acrylate, 1, 3-propanediol di(meth)acrylate, 1,4-butanediol di(meth)acrylate, 1,6-hexanediol di(meth)acrylate, 1,9-nonanediol di(meth)acrylate, hydroxypivalic acid ester neopentyl glycol di(meth)acrylate, bisphenol A di(meth)acrylate, 2,2-bis(4-(meth)acryloyloxyethoxyphenyl)propane, 2,2-bis(4-(meth)acryloyloxydiethoxyphenyl)propane, trimethylolpropane di(meth)acrylate, tricyclodecane dimethanol diacrylate and bis(2-(meth)acryloyloxyethyl)hydroxyethyl-isocyanurate.

Examples of the polyfunctional (meth)acrylates include trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, trimethylolpropane trioxyethyl (meth)acrylate and tris(2-hydroxyethyl)isocyanurate tri(meth)acrylate.

Examples of the epoxy poly(meth)acrylates include those obtained by allowing compounds having two or more epoxy groups in a molecule such as bisphenol A type epoxy resin, to react with (meth)acrylic acid or (meth)acrylate having a hydroxyl group.

Examples of the urethane poly (meth) acrylates include urethane di(meth)acrylate obtained by allowing diisocyanate such as 1,6-hexamethylene diisocyanate, isophorone diisocyanate or dicyclohexylmethane diisocyanate, to react with (meth)acrylate having a hydroxyl group such as 2-hydroxyethyl (meth)acrylate, urethane hexa (meth)acrylate obtained by allowing 1, 6-hexamethylene diisocyanate to react with pentaerythritol tri(meth)acrylate, and polyurethane di (meth) acrylate obtained by allowing a urethanization reaction product of dicyclomethane diisocyanate and poly(repeating unit n = 6 to 15) tetramethylene glycol, to react with 2-hydroxyethyl (meth) acrylate.

Examples of the polyester poly(meth)acrylates include polyester (meth) acrylate obtained by allowing trimethylolpropane to react with succinic acid and (meth)acrylic acid, and polyester (meth) acrylate obtained by allowing trimethylolpropane to react with ethylene glycol, succinic acid and (meth)acrylic acid.

These reactive monomers (E) can be used singly or in combination of two or more kinds.

Of these reactive monomers (E), polyfunctional (meth) acrylates are preferable, and specifically, trimethylolpropane tri(meth)acrylate, pentaerythritol tetra(meth)acrylate, dipentaerythritol hexa(meth)acrylate, etc. can be mentioned.

Although the amount of the reactive monomer (E) used is not specifically restricted, it is in the range of usually 0.1 to 100 parts by mass, preferably 0.5 to 80 parts by mass, more preferably 1 to 50 parts by mass, still more preferably 1 to 30 parts by mass, based on 10 parts by mass of the urethane compound (A). By the use of the reactive monomer (E), surface hardness of a cured product obtained by curing the curable composition can be enhanced.

### <Other components>

In the curable composition of the present invention, a polymerization inhibitor may be contained in an amount of not more than 0.1 part by mass based on 100 parts by mass of the curable composition. The polymerization inhibitor is used in order to prevent a component contained in the curable composition from producing polymerization reaction during storage. Examples of the polymerization inhibitors include hydroquinone, hydroquinone monomethyl ether, benzoquinone, p-t-butyl catechol and 2,6-di-tert-butyl-4-methylphenol.

To the curable composition of the present invention, a leveling agent, a filler, a pigment, an inorganic filler, a solvent and other modifiers may be added.

Examples of the leveling agents include a polyether modified dimethylpolysiloxane copolymerization product, a polyester modified dimethylpolysiloxane copolymerization product, a polyether modified methylalkylpolysiloxane copolymerization product, an aralkyl modified methylalkylpolysiloxane copolymerization product and a polyether modified methylalkylpolysiloxane copolymerization product.

Examples of the fillers or the pigments include calcium carbonate, talc, mica, clay, silica (colloidal silica, Aerosil (trademark), etc.), barium sulfate, aluminum hydroxide, zinc stearate, zinc white, colcothar and azo pigment.

Examples of the inorganic fillers include conductive metal fine particles and metal oxide fine particles. Examples of metals of the metal fine particles include gold, silver, copper, platinum, aluminum, antimony, selenium, titanium, tungsten, tin, zinc, indium and zirconium, and specific examples of metal oxides of the metal oxide fine particles include alumina, antimony oxide, selenium oxide, titanium oxide, tungsten oxide, tin oxide, antimony doped tin oxide (ATO (tin oxide doped with antimony)), phosphorus doped tin oxide, zinc oxide, zinc antimonate and tin doped indium oxide.

Examples of the other modifiers include natural and synthetic high-molecular substances, such as polyolefin-based resin, chlorinated modified polyolefin-based resin, unsaturated polyester resin, vinyl ester resin, vinyl urethane resin, vinyl ester urethane resin, polyisocyanate, polyepoxide, epoxy-terminated polyoxazolidone, acrylic resins, alkyd resins, urea resins, melamine resins, polydiene-based elastomer, saturated polyesters, saturated polyethers, cellulose derivatives such as nitrocellulose and cellulose acetate butyrate, and fas and oils such as linseed oil, wood oil, soybean oil, castor oil and epoxidized oil.

The curable composition of the present invention can be formulated and prepared by mixing the urethane compound (A) represented by the general formula (1), the thiol compound (B) and the polymerization initiator (C) with one another by a mixing machine such as a mixer, a ball mill or a three-roll mill, at room temperature or under heating conditions, or by adding a reactive monomer or a solvent as a diluent to dissolve the components. A specific example of the reactive monomer used herein as the diluent is the aforesaid reactive monomer (E).

Examples of the solvents for use in the present invention include esters such as ethyl acetate, butyl acetate and isopropyl acetate; ketones such as acetone, methyl ethyl ketone, methyl isobutyl ketone and cyclohexanone; cyclic ethers such as tetrahydrofuran and dioxane; amides such as N,N-dimethylformamide; aromatic hydrocarbons such as toluene, and halogenated hydrocarbons such as methylene chloride; ethylene glycols such as ethylene glycol, ethylene glycol methyl ether, ethylene glycol mono-n-propyl ether, ethylene glycol monomethyl ether acetate, diethylene glycol, diethylene glycol monomethyl ether, diethylene glycol monoethyl ether and diethylene glycol monoethyl ether acetate; and propylene glycols such as propylene glycol, propylene glycol methyl ether, propylene glycol ethyl ether, propylene glycol butyl ether, propylene glycol propyl ether, propylene glycol monomethyl ether acetate, dipropylene glycol, dipropylene glycol monomethyl ether, dipropylene glycol monoethyl ether and dipropylene glycolmonomethyletheracetate. Preferable are ethyl acetate, methyl ethyl ketone, cyclohexanone, toluene, dichloromethane, diethylene glycol monomethyl ether and propylene glycol monomethyl ether acetate.

The above solvents can be used singly or in combination of two or more kinds.

Although the amount of the solvent used is not specifically restricted, it is in the range of usually 5 to 20 parts by mass, preferably 5 to 10 parts by mass, based on 10 parts by mass of the curable composition.

The curable composition of the present invention can be cured by, for example, coating the curable composition on a base material to form a coating film and then irradiating with active energy rays or heating. For the curing, both of irradiation with active energy rays and heating may be carried out.

Examples of the coating methods include coating with a bar coater, an applicator, a die coater, a spin coater, a spray coater, a curtain coater, a roll coater or the like, coating by screen printing, and coating by dipping.

The amount of the curable composition of the present invention coated on the base material is not specifically restricted, and can be appropriately adjusted according to the purpose. It is preferably such an amount that the film thickness of the coated film for the purpose of evaluation which is obtained by carrying out coating, drying and subsequent curing treatment by irradiation with active energy rays becomes 1 to 200 µm, more preferably 5 to 100 µm.

As the active energy rays used for curing, electron rays or lights within the ultraviolet to infrared wavelength region are preferable. As the light sources, the following ones are employable. For example, when the active energy rays are ultraviolet rays, an extra-high pressure mercury light source or a metal halide light source is employable; when they are visible rays, a metal halide light source or a halogen light source is employable; and when they are infrared rays, a halogen light source is employable. In addition, other light sources, such as laser and LED, are employable. The irradiation dose of the active energy rays is properly determined according to the type of the light source, film thickness of the coated film, etc.

### EXAMPLES

The present invention is described in more detail hereinafter with reference to the examples and the comparative examples, but it should be construed that the present invention is in no way limited to the description of them.

The term "part(s)" in the examples means "part(s) by mass".

### (Synthesis Example 1)

### <Urethane compound (A-1)>

In a reaction vessel, 100 parts of 2-hydroxyethyl acrylate (available from Osaka Organic Chemical Industry Ltd.), 142 parts of hexane (available from Junsei Chemical Co., Ltd.) containing 200 ppm of 2,6-di-tert-butyl-4-methylphenol (BHT, available from Junsei Chemical Co., Ltd.) and 2.8 parts of dibutyltin dilaurate (available from Tokyo Kasei Kogyo Co., Ltd.) were placed, and they were stirred. Thereafter, 122 parts of 2-acryloyloxyethyl isocyanate (available from Showa Denko K.K., trade name: Karenz (trademark) AOI) were dropwise added slowly, followed by stirring at room temperature. After it was confirmed by high performance liquid chromatography that the peak of 2-hydroxyethyl acrylate had nearly disappeared, the reaction was completed, and subsequently, by the use of 203 parts of hexane containing 200 ppm of BHT, washing was carried out 4 times to obtain a urethane compound (A-1).

### (Synthesis Example 2)

### <Urethane compound (A-2)>

A urethane compound (A-2) was obtained in the same manner as in Synthesis Example 1, except that 2-methacryloyloxyethyl isocyanate (available from Showa Denko K.K., trade name: Karenz (trademark) MOI) was used instead of 2-acryloyloxyethyl isocyanate.

### (Synthesis Example 3)

### <Urethane compound (A-3)>

A urethane compound (A-3) was obtained in the same manner as in Synthesis Example 1, except that 2-hydroxyethyl methacrylate (available from Osaka Organic Chemical Industry Ltd.) was used instead of 2-hydroxyethyl acrylate.

### (Synthesis Example 4)

### <Urethane compound (F-1)>

Into a toluene solvent containing 200 ppm of 2,6-di-tert-butyl-4-methylphenol (BHT, available from Junsei Chemical Co., Ltd.), 100 parts of BPX-33 (available from ADEKA CORPORATION) as bisphenol type polyol, 76 parts of isophorone diisocyanate (available from Tokyo Kasei Kogyo Co., Ltd.) as polyisocyanate and 40 parts of 2-hydroxyethyl acrylate (available from Osaka Organic Chemical Industry Ltd.) were introduced together. Then, 0. 054 part of dibutyltin dilaurate (available from Tokyo Kasei Kogyo Co., Ltd.) was added, and they were allowed to undergo reaction at 70°C for 10 hours. By the use of 200 parts of hexane containing 200 ppm of BHT, washing was carried out 4 times to obtain a urethane compound (F-1).

### (Synthesis Example 5)

### <Urethane compound (F-2)>

In a reaction vessel, 100 parts of isophorone diisocyanate (available from Tokyo Kasei Kogyo Co., Ltd.), 0.141 part of dibutyltin dilaurate (available from Tokyo Kasei Kogyo Co., Ltd.) and 0.073 part of 2,6-di-tert-butyl-4-methylphenol (BHT, available from Junsei Chemical Co., Ltd.) were placed, and they were stirred at 60°C for 1 hour. Thereafter, 105 parts of 2-hydroxyethyl acrylate (available from Osaka Organic Chemical Industry Ltd.) were added, followed by stirring at 80°C for 2 hours. By the use of 200 parts of hexane containing 200 ppm of BHT, washing was carried out 4 times to obtain a urethane compound (F-2).

### (Example 1)

### <Preparation of curable composition>

In a container shielded from ultraviolet rays, 98 parts of the urethane compound (A-1) prepared in Synthesis Example 1, 2 parts of pentaerythritol tetrakis(3-mercaptobutyrate) (available from Showa Denko K. K. , trade name: Karenz (trademark) MT PE1) as the thiol compound (B) and 2 parts of 1-hydroxycyclohexyl phenyl ketone (available from Ciba Specialty Chemicals Inc., trade name: Irgacure 184) as the polymerization initiator (C) were blended, and they were stirred and mixed at room temperature to be homogeneously dissolved, whereby a curable composition solution (solution 1) was obtained.

### (Example 2)

### <Preparation of curable composition>

A curable composition solution (solution 2) was obtained in the same manner as in Example 1, except that (A-2) was used instead of (A-1).

### (Example 3)

### <Preparation of curable composition>

A curable composition solution (solution 3) was obtained in the same manner as in Example 1, except that (A-3) was used instead of (A-1).

### (Comparative Example 1)

### <Preparation of curable composition>

A curable composition solution (solution 4) was obtained in the same manner as in Example 1, except that pentaerythritol tetrakis (3-mercaptobutyrate) (available from Showa Denko K.K., trade name: Karenz (trademark) MT PE1) which was the thiol compound (B) was not used.

### (Comparative Example 2)

### <Preparation of curable composition>

A curable composition solution (solution 5) was obtained in the same manner as in Example 1, except that a monomer solution (A-4) composed of a mixture of pentaerythritol triacrylate (available from Kyoeisha Chemical Co., Ltd., trade name: Light Acrylate PE-3A) /neopentyl glycol diacrylate (available from Kyoeisha Chemical Co., Ltd., trade name: Light Acrylate NP-A) (90/10 (wt% ratio)) was used instead of (A-1), and pentaerythritol tetrakis (3-mercaptobutyrate) (available from Showa Denko K.K., trade name: Karenz (trademark) MT PE1) which was the thiol compound (B) was not used.

### (Comparative Example 3)

### <Preparation of curable composition>

A curable composition solution (solution 6) was obtained in the same manner as in Example 1, except that a monomer solution (A-5) composed of a mixture of trimethylolpropane triacrylate (available from Kyoeisha Chemical Co., Ltd., trade name: Light Acrylate TMP-A) /neopentyl glycol diacrylate (available from Kyoeisha Chemical Co., Ltd., trade name: Light Acrylate NP-A) (90/10 (wt% ratio)) was used instead of (A-1), and pentaerythritol tetrakis (3-mercaptobutyrate) (available from Showa Denko K.K., trade name: Karenz (trademark) MT PE1) which was the thiol compound (B) was not used.

### (Comparative Example 4)

### <Preparation of curable composition>

A curable composition (solution 7) was obtained in the same manner as in Example 1, except that 1,6-hexanediol dimethacrylate (A-6) (available from Kyoeisha Chemical Co., Ltd.) was used instead of (A-1) .

### [Preparation of cured film]

The curable composition solutions (solution 1) to (solution 7) prepared in Examples 1 to 3 and Comparative Examples 1 to 4 were coated on different glass substrates (50mmX50mm), respectively, so that the thickness of the cured film would become 40 µm. The coated films were exposed to light at 1 J/cm² by the use of an exposure device into which an extra-high pressure mercury lamp was incorporated to cure the coated films. The resulting respective cured films were each subjected to such evaluations as described below.

### [Property evaluation method]

### (1) Pencil hardness

The cured films obtained in the above "Preparation of cured film" were scratched with Uni (trademark) available from Mitsubishi Pencil Co., Ltd. in such a manner that the angle between the pencil and the cured film became 45 degrees in accordance with JIS-K5600, then a pencil of maximum hardness which made no scratch mark was determined, and the hardness was regarded as a pencil hardness. It is set forth in Table 1.

### (2) Light transmittance

The cured films obtained in the "Preparation of cured film" were measured on the transmittance for light having a wavelength of 400 nm by the use of a spectrophotometer (manufactured by JASCO Corporation, UV3100) in accordance with JIS-K7105. It is set forth in Table 1.

### (3) Curling property

The curable composition solutions (solution 1) to (solution 7) were coated on different polyimide films of 3 cm square, respectively, so that the thickness of the cured filmwouldbecome 20 µm. Subsequently, the coated films were exposed to light at 500 mJ/cm² by the use of an exposure device into which an extra-high pressure mercury lamp was incorporated, then each of the heights of four sides having warped up on a horizontal pedestal was measured. Their mean value was regarded as a value of curling property. The results are set forth in Table 1. The more the mean value approaches 0 mm, the better the curling property is.

### (4) Light-exposed dose for polymerization initiation

### (Curability)

Under irradiation with UV of 3 mW, viscosity changes of the curable composition solutions (solution 1) to (solution 7) were measured by the use of a rheometer with an UV cure measuring cell (rheometer (VAR·DAR) manufactured by Reologica Co.). On the assumption that the polymerization reaction of the curable composition was initiated at the time the viscosity of the curable composition solution became 200 Pa·s, the light-exposed dose for polymerization initiation was determined. The results are set forth in Table 1. The unit of numerical values indicating formulation of the composition in Table 1 is part(s) by mass.

**Table 1**

| | | Example 1 | Comp. Example 1 | Comp. Example 2 | Comp. Example 3 | Example 2 | Example 3 | Example 4 |
|---|---|---|---|---|---|---|---|---|
| Composition | A-1 | 98 | 98 | | | | | |
| | A-2 | | | | | 98 | | |
| | A-3 | | | | | | 98 | |
| | A-4 | | | 98 | | | | |
| | A-5 | | | | 98 | | | |
| | A-6 | | | | | | | 98 |
| | PE1 | 2 | | | | 2 | 2 | 2 |
| | irgacure 184 | 2 | 2 | 2 | 2 | 2 | 2 | 2 |
| Evaluation | Pencil hardness | 3H | 3H | 5H | 4H | 4H | 4H | 2H |
| | Transmittance (%) | 98.4 | 98.4 | 96.8 | 96.7 | 98.6 | 98.3 | 98.2 |
| | Curling property (mm) | +3.6 | +6.0 | +10.7 | +6.3 | +3.5 | +2.8 | +2.9 |
| | Light-exposed dose for polymerization initiation (mJ/cm²) | 0.2 | 2.3 | 7.0 | 7.4 | 10.4 | 14.6 | 400< |

It can be seen from Table 1 that the curable composition (Example 1) of the present invention having the component (A-1) was excellent in curling property and was remarkably excellent in curability. The curedproduct thereof was excellent in pencil hardness and transparency. In contrast with this, Comparative Example 1 to which the thiol compound PE1 (B) had not been added was inferior to the curable composition of Example 1 in curling property. The cured films of Comparative Examples 2 and 3 containing the acrylic monomers (A-4) and (A-5) having an acrylate structure similarly to the component (A-1) were cured films prepared by the use of curable compositions having almost the same formulations as those of the curable compositions used in Examples 2 and 4 of the patent document 2, respectively. Although these cured films were superior to Example 1 in pencil hardness, the curling properties of the curable compositions were inferior.

Further, the curable compositions (Examples 2 and 3) containing the components (A-2) and (A-3) having a methacrylate structure had better curability as compared with Comparative Example 4 using (A-6) which was bifunctional and similarly had a methacrylate structure, and their cured products were excellent in pencil hardness.

Moreover, it can be seen from Table 1 that the curable compositions of Examples 1 to 3 formed cured products having excellent surface hardness and also having good transparency and curlingproperty, and that they were cured in a low light-exposed dose. On the other hand, it can be also seen that the curable compositions of Comparative Examples 1 to 4 were insufficient in any one of properties such as curability and curling property and pencil hardness of their cured products.

### (Example 4)

### <Preparation of curable composition>

In a container shielded from ultraviolet rays, 50 parts of the urethane compound (A-1) prepared in Synthesis Example 1, 5 parts of 1,4-butanediol bis (3-mercaptobutyrate) (available from Showa Denko K.K., trade name: Karenz (trademark) MT BD1) as the thiol compound (B), 3 parts of 1-hydroxycyclohexyl phenyl ketone (available from Ciba Specialty Chemicals Inc., trade name: Irgacure 184) as the polymerization initiator (C), and 25 parts of UA-160TM (available from Shin-Nakamura Chemical Co., Ltd., reaction product of 2-hydroxyethyl acrylate, isophorone diisocyanate and polytetramethylene glycol) and 25 parts of U-15HA (available from Shin-Nakamura Chemical Co., Ltd.) as the urethane oligomers (D) were blended, and they were stirred and mixed at room temperature to be homogeneously dissolved, whereby a curable composition solution (solution 8) was obtained.

### (Example 5)

### <Preparation of curable composition>

A curable composition solution (solution 9) was obtained in the same manner as in Example 4, except that UA-122P (available from Shin-Nakamura Chemical Co., Ltd.) was used instead of UA-160TM.

### (Comparative Example 5)

### <Preparation of curable composition>

In a container shielded from ultraviolet rays, 75 parts of the urethane compound (F-1) prepared in Synthesis Example 4, 4 parts of 1-hydroxycyclohexyl phenyl ketone (available from Ciba Specialty Chemicals Inc., trade name: Irgacure 184) as the polymerization initiator (C), 25 parts of AMP-60G (available from Shin-Nakamura Chemical Co., Ltd., phenoxypolyethylene glycol acrylate) as the reactive monomer (E) and 100 parts of dichloromethane as a solvent were blended, and they were stirred and mixed at room temperature to be homogeneously dissolved, whereby a curable composition solution (solution 10) was obtained.

### (Comparative Example 6)

### <Preparation of curable composition>

In a container shielded from ultraviolet rays, 80 parts of the urethane compound (F-2) prepared in Synthesis Example 5, 5 parts of 1-hydroxycyclohexyl phenyl ketone (available from Ciba Specialty Chemicals Inc., trade name: Irgacure 184) as the polymerization initiator (C), 20 parts of AMP-10G (available from Shin-Nakamura Chemical Co., Ltd., 2-phenoxyethyl acrylate) as the reactive monomer (E) and 100 parts of dichloromethane as a solvent were blended, and they were stirred and mixed at room temperature to be homogeneously dissolved, whereby a curable composition solution (solution 11) was obtained.

### (Comparative Example 7)

### <Preparation of curable composition>

In a container shielded from ultraviolet rays, 80 parts of the urethane compound (F-2) prepared in Synthesis Example 5, 5 parts of 1-hydroxycyclohexyl phenyl ketone (available from Ciba Specialty Chemicals Inc., trade name: Irgacure 184) as the polymerization initiator (C), 15 parts of AMP-10G (available from Shin-Nakamura Chemical Co., Ltd.) and 5 parts of PE-3A (available from Kyoeisha Chemical Co., Ltd., pentaerythritol triacrylate) as the reactive monomers (E) , and 100 parts of dichloromethane as a solvent were blended, and they were stirred and mixed at room temperature to be homogeneously dissolved, whereby a curable composition solution (solution 12) was obtained.

### (Comparative Example 8)

### <Preparation of curable composition>

In a container shielded from ultraviolet rays, 80 parts of the urethane compound (F-2) prepared in Synthesis Example 5, 5 parts of 1-hydroxycyclohexyl phenyl ketone (available from Ciba Specialty Chemicals Inc., trade name: Irgacure 184) as the polymerization initiator (C), 20 parts of DPHA (available from Kyoeisha Chemical Co., Ltd., dipentaerythritol hexaacrylate) as the reactive monomer (E) and 100 parts of dichloromethane as a solvent were blended, and they were stirred and mixed at room temperature to be homogeneously dissolved, whereby a curable composition solution (solution 13) was obtained.

### [Preparation of cured film]

The curable composition solutions (solution 8) to (solution 13) prepared in Examples 4 and 5 and Comparative Examples 5 to 8 were coated on different glass substrates (50mm×50mm), respectively, so that the thickness of the cured film would become 100 µm. The coated films were exposed to light at 1 J/cm² by the use of an exposure device into which an extra-high pressure mercury lamp was incorporated to be cured. The resulting cured films were each subjected to such evaluation as described below.

### [Property evaluation method]

### (1) Pencil hardness

The cured films obtained in the above "Preparation of cured film" were scratched with Uni (trademark) available from Mitsubishi Pencil Co., Ltd. in such a manner that the angle between the pencil and the cured film became 45 degrees in accordance with JIS-K5600, then a pencil of maximum hardness which made no scratch mark was determined, and the hardness was regarded as a pencil hardness. It is set forth in Table 2.

### (2) Light transmittance

The cured films obtained in the "Preparation of cured film" were measured on the transmittance for light having a wavelength of 400 nm by the use of a spectrophotometer (manufactured by JASCO Corporation, UV3100) in accordance with JIS-K7105. The results are set forth in Table 2.

### (3) Curling property

The curable composition solutions (solution 8) to (solution 13) were coated on different polyimide films of 3 cm square, respectively, so that the thickness of the cured film would become 40 µm. Subsequently, the coated films were exposed to light at 500 mJ/cm² by the use of an exposure device into which an extra-high pressure mercury lamp was incorporated, then each of the heights of four sides having warped up on a horizontal pedestal was measured. Their mean value was regarded as a value of curling property. The results are set forth in Table 2. The more the mean value approaches 0 mm, the better the curling property is.

### (4) Light-exposed dose for polymerization initiation

### (curability)

Under irradiation with UV of 3 mW, viscosity changes of the curable composition solutions (solution 8) to (solution 13) were measured by the use of a rheometer with an UV cure measuring cell (rheometer (VAR·DAR) manufactured by Reologica Co.). On the assumption that the polymerization reaction of the curable composition was initiated at the time the viscosity of the curable composition solution became 200 Pa·s, the light-exposed dose for polymerization initiation was determined. The results are set forth in Table 2. The smaller the exposed dose for polymerization initiation is, the better the curability is.

### (5) Scratch resistance

The surfaces of the cured films obtained in the above "Preparation of cured film" were each rubbed back and forth 10 times with a steel wool of #0000 at a stroke of 25 mm and a rate of 30 mm/sec under application of a load of 175 g/cm². Thereafter, presence of scratch mark on the surface was visually observed. The evaluation criteria are as follows, and the evaluation results are set forth in Table 2.
A: Any scratch mark is not observed at all.
B: A small number of scratch marks are observed.
C: A large number of scratch marks are observed.

### (6) Bending resistance

The cured films obtained in the above "Preparation of cured film" were each wound around a metal bar having a diameter of 2 mm, and presence of crack was visually observed. The evaluation criteria are as follows, and the evaluation results are set forth in Table 2.
A: Any crack is not formed at all.
B: Cracks are rarely formed.
C: Cracks are always formed.

### (7) Elongation at break (flexibility)

The cured films obtained in the above "Preparation of cured film" were each cut into a strip (5mm×30mm), and 7.5 mm of both ends thereof were each applied a tab with polyimide films. They were pulled by the use of a small table tester (EZ-test, manufactured by Shimadzu Corporation) under the conditions of a gap distance of 15 mm and a pulling rate of 5 mm/min in accordance with JIS-K7127 to measure an elongation at break. The evaluation results are set forth in Table 2. The elongation at break indicates flexibility, and the bigger elongation at break means higher flexibility.

**Table 2**

| | | | Example 4 | Example 5 | Comp. Example 5 | Comp. Example 6 | Comp. Example 7 | Comp. Example 8 |
|---|---|---|---|---|---|---|---|---|
| Composition | (A) | A-1 | 50 | 50 | | | | |
| | (B) | BD1 | 5 | 5 | | | | |
| | (C) | Irgacure 184 | 3 | 3 | 4 | 5 | 5 | 5 |
| | (D) | UA-160TM | 25 | | | | | |
| | | UA-122P | | 25 | | | | |
| | | U-15HA | 25 | 25 | | | | |
| | (E) | AMP-60G | | | 25 | | | |
| | | AMP-10G | | | | 20 | 15 | |
| | | PE-3A | | | | | | |
| | | DPHA | | | | | | 20 |
| | (F) | F-1 | | | 75 | | | |
| | | F-2 | | | | 80 | 80 | 80 |
| Evaluation | | Pencil hardness | H | H | 8B | B | HB | H |
| | | Transmittance (%) | 96.0 | 98.6 | 98.5 | 98.5 | 98.4 | 98.3 |
| | | Curling property (mm) | +3.7 | +5.5 | +1.0 | +3.1 | +3.9 | +4.6 |
| | | Light-exposed dose for polyerization initiation | <0.2 | <0.2 | 3.8 | 0.9 | 0.9 | 2.3 |
| | | (mJ/cm²) | | | | | | |
| | | Scratch resistance | A | B | C | C | C | C |
| | | Bending resistance | B | B | A | A | A | B |
| | | Elongation at break (%) | 4.0 | 3.6 | 64.5 | 8.8 | 10.3 | 4.6 |

In Table 2, the unit of numerical values indicating formulation of the composition is "part(s) by mass". In Comparative Examples 5 to 8, 100 parts by mass of dichloromethane was added as a solvent.

It can be seen from Table 2 that the curable resins (Examples 4 and 5) prepared by using the curable compositions of the present invention having the component (A-1) and the thiol compound (B) had very good curability and could form cured films having excellent scratch resistance and good bending resistance and having strength and flexibility which were compatible with each other.

In contrast with them, the curable composition (Comparative Example 5) having almost the same formulation as that of the curable composition used in Example 1 of the patent document 5 was inferior in pencil hardness and scratch resistance though it was sufficient in curling property, bending resistance and elongation at break. Also the curable compositions (Comparative Examples 6 and 7) having almost the same formulations as those of the curable compositions used in Examples 1 and 2 of the patent document 6 were insufficient in pencil resistance and scratch resistance though they had good curability and bending resistance. Further, the curable composition (Comparative Example 8) having almost the same formulation as that of the curable composition used in Comparative Example 1 of the patent document 6 had not only insufficient bending resistance but also poor scratch resistance.

### INDUSTRIAL APPLICABILITY

As described hereinbefore, the curable compositions of the present invention are useful as being capable of coping with high-line speed. Further, the cured products thereof are preferable as coating materials or optical films for purpose of decoration or protection. The cured products are used in fields where a balance between strength and flexibility is required, such as liquid crystal televisions, personal computers, displays of cell phones, touch panels and lenses of wrist watches, and they are useful as optical materials serving as coating materials.

Moreover, the curable compositions of the present invention can be used as paints providing coated films having an excellent balance among curability, strength and flexibility, and can be used also as adhesives having excellent curability.

## Claims

1. A curable composition comprising:
(A) a urethane compound represented by the following general formula (1),
(B) a thiol compound, and
(C) a polymerization initiator, 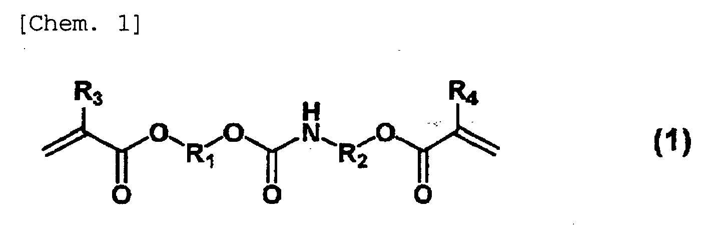
wherein R₁ is a straight-chain or branched divalent aliphatic group of 1 to 12 carbon atoms, a divalent organic group of 3 to 12 carbon atoms having an alicyclic group, a divalent organic group of 6 to 30 carbon atoms having an aromatic ring or [-(CH₂)ₐ-O-(CH₂)_{b}-]_{c} (a and b are each independently an integer of 1 to 10, and c is an integer of 1 to 5),
R₂ is a straight-chain or branched divalent aliphatic group of 1 to 10 carbon atoms, a divalent organic group of 3 to 10 carbon atoms having an alicyclic group, a divalent organic group of 6 to 30 carbon atoms having an aromatic ring or [-(CH₂)_{d}-O-(CH₂)ₑ-]_{f} (d and e are each independently an integer of 1 to 10, and f is an integer of 1 to 5), and
R₃ and R₄ are each independently a hydrogen atom or a methyl group.

2. The curable composition as claimed in claim 1, wherein in the formula (1),
R₁ is a divalent aliphatic group of 1 to 6 carbon atoms or [-(CH₂)ₐ-O-(CH₂)_{b}-]_{c} (a and b are each independently an integer of 1 to 5, and c is an integer of 1 to 3),
R₂ is a divalent aliphatic group of 1 to 6 carbon atoms, a divalent organic group of 6 to 30 carbon atoms having a benzene ring or [-(CH₂)_{d}-O-(CH₂)ₑ-]_{f} (d and e are each independently an integer of 1 to 5, and f is an integer of 1 to 3), and
R₃ and R₄ are each independently a hydrogen atom or a methyl group.

3. The curable composition as claimed in claim 1 or 2, wherein based on 10 parts by mass of the urethane compound (A),
the thiol compound (B) is contained in an amount of 0.1 to 10 parts by mass, and
the polymerization initiator (C) is contained in an amount of 0.1 to 5 parts by mass.

4. The curable composition as claimed in any one of claims 1 to 3, further comprising (D) a urethane oligomer.

5. The curable composition as claimed in claim 4, wherein the urethane oligomer (D) is contained in an amount of 1 to 100 parts by mass based on 10 parts by mass of the urethane compound (A).

6. The curable composition as claimed in any one of claims 1 to 5, further comprising (E) a reactive monomer.

7. The curable composition as claimed in claim 6, wherein the reactive monomer (E) is contained in an amount of 1 to 100 parts by mass based on 10 parts by mass of the urethane compound (A).

8. The curable composition as claimed in any one of claims 1 to 7, wherein the thiol compound (B) has two or more structures represented by the following general formula (2): 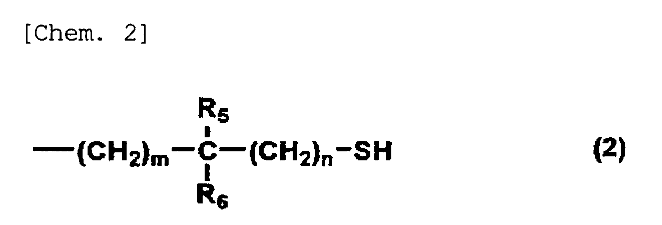 wherein R₅ and R₆ are each independently a hydrogen atom, an alkyl group of 1 to 10 carbon atoms or an aryl group, m is an integer of 0 to 2, and n is 0 or 1.

9. The curable composition as claimed in claim 8, wherein R₅ and R₆ in the formula (2) are not hydrogen atoms at the same time.

10. A paint comprising the curable composition as claimed in any one of claims 1 to 9.

11. An adhesive comprising the curable composition as claimed in any one of claims 1 to 9.

12. A cured product obtained by curing the curable composition as claimed in any one of claims 1 to 9.

13. A coating material obtained by curing the curable composition as claimed in any one of claims 1 to 9.

14. An optical filmobtainedby curing the curable composition as claimed in any one of claims 1 to 9.
